# EUROPÄISCHE PATENTSCHRIFT

(11) **EP 3 558 751 B1**
(45) Veröffentlichungstag und Bekanntmachung des Hinweises auf die Patenterteilung: **06.01.2021**
(21) Anmeldenummer: 17803865.9
(22) Anmeldetag: 14.11.2017
(51) Int. Cl.: B60R 11/00, B60R 13/01

(54) **VORRICHTUNG ZUR HALTERUNG EINES GEGENSTANDES AN EINER INNENVERKLEIDUNG EINES FAHRZEUGS SOWIE FAHRZEUG**
DEVICE FOR MOUNTING AN OBJECT ON AN INTERIOR TRIM OF A VEHICLE, AND VEHICLE
DISPOSITIF PERMETTANT DE RETENIR UN OBJET SUR UN HABILLAGE INTÉRIEUR D'UN VÉHICULE ET VÉHICULE

(30) Priorität: 20.12.2016 DE 102016225658
(43) Veröffentlichungstag der Anmeldung: 30.10.2019
(73) Patentinhaber: Volkswagen Aktiengesellschaft, 38440 Wolfsburg (DE)
(72) Erfinder: SIEGLER, Philipp, 38518 Gifhorn (DE); STAMPE, Thomas, 31275 Lehrte (DE); KLEIN, Roland, 38442 Wolfsburg (DE)
(86) Internationale Anmeldenummer: PCT/EP2017/079235
(87) Internationale Veröffentlichungsnummer: WO 2018/114146

(56) Entgegenhaltungen:
- EP-A2- 0 893 307
- DE-A1- 10 218 995
- DE-U1-202016 103 397

## Beschreibung

Die Erfindung betrifft ein Halterungssystem eines Fahrzeugs, insbesondere eines Kraftfahrzeugs, nach dem Oberbegriff des Patentanspruchs 1 der Erfindung. Gemäß Anspruch 10 der Erfindung betrifft dieselbe ferner ein Fahrzeug, insbesondere ein Kraftfahrzeug, mit einem derartigen Halterungssystem.

Die DE 20 2015 001 437 U1 beschreibt eine Heckklappenverkleidung für ein Kraftfahrzeug mit einer Mulde zum Verstauen eines Warndreiecks. Das Warndreieck ist mittels mehrteiliger Befestigungsmittel in der besagten Mulde lösbar befestigt. Wie die Befestigung im Detail bewirkt ist, schweigt sich diese Druckschrift aus.

Die DE 10 2006 020 953 A1 beschreibt eine Vorrichtung zur Aufnahme eines in einem Kraftfahrzeug verwendeten Gegenstandes, wie eines Warndreiecks, eines Verbandkastens oder dgl. mehr. Die besagte Vorrichtung weist eine Ausnehmung in einem Verkleidungsteil eines Heckdeckels des Kraftfahrzeugs auf, welche Ausnehmung zur Unterbringung des besagten Gegenstandes vorgesehen ist. An einem Randbereich der Ausnehmung sind einenends derselben einander gegenüberliegend erste Halteelemente in Form von elastisch gelagerten Widerhaken angeordnet, um durch Verrastung mit dem Gegenstand diesen in der Ausnehmung zu verriegeln. Darüber hinaus sind anderenends der Ausnehmung einander gegenüberliegend zweite Halteelemente vorgesehen, die als Vorsprung der Wandung der Ausnehmung über die Beschicköffnung der Ausnehmung ragen. Während der Beschickung der Ausnehmung mit dem besagten Gegenstand wird derselbe zunächst mit seinem einen Ende unter die beiden Vorsprünge geschoben. Hiernach schließt sich eine Schwenkbewegung des anderen Endes des Gegenstandes in die Ausnehmung hinein an, welches mit einem Verrasten der Widerhaken mit dem Gegenstand einhergeht.

Die DE 10 2014 207 362 A1 beschreibt eine Vorrichtung mit einer Vertiefung in einem Wandabschnitt einer Innenverkleidung eines Kraftfahrzeugs zur Aufnahme eines Aufbewahrungsbehälters, wobei die Vertiefung beidenends einen begrenzten, die Beschicköffnung überdeckenden Bereich der Innenverkleidung aufweist. Die Beschickung der Vertiefung mit dem Aufbewahrungsbehälter sowie die Entnahme desselben aus der Vertiefung erfolgt durch Verschieben des Aufbewahrungsbehälters in Längsrichtung gegen die Federkraft einer im überdeckten Endbereich der Vertiefung angeordneten Feder oder gegen ein Dämpfungselement in Form beispielsweise eines Schaumstoffwürfels, kombiniert mit einer Schwenkbewegung. Um den Aufbewahrungsbehälter quer zur Verschieberichtung desselben spielfrei in der Vertiefung zu halten, weist diese Abstandsrippen auf.

Die DE 102 18 995 A1 offenbart eine Vorrichtung zur Befestigung von stückigem Ladegut, insbesondere einer entnehmbaren Gepäckaufnahmebox, im Gepäckraum eines Fahrzeugs. Hierzu ist das Ladegut einenends in eine hintere starre Aufnahmeeinrichtung am Boden des Gepäckraums formschlüssig einsetzbar und anderenends durch Schwenken um eine im Wesentlichen horizontale, quer zur Fahrtrichtung des Fahrzeugs verlaufende Achse (Y-Achse) zum Boden des Gepäckraums hin lösbar in einer vorderen Aufnahmeeinrichtung arretierbar, insbesondere verrastbar.

Die EP 0 893 307 A2 offenbart einen Behälter für einen Gepäckraum eines Fahrzeugs, welcher mit langen und kurzen Wänden respektive Schmalseiten und Breitseiten ausgestattet ist und mittels einenends im Bereich einer Breitseite angeordneter hakenähnlicher Führungsansätze in Widerlager einer Vertiefung des Gepäckraumbodens einsetzbar und nachfolgend anderenends durch Schwenken um eine horizontal verlaufende Achse in besagte Vertiefung hinein auf einen Boden derselben absetzbar ist. Im Bereich der Schmalseiten weist der Behälter Positionierungsaussparungen auf, welche mit Positionierungsfedersperren der Vertiefung korrespondieren.

Die DE 20 2016 103 397 U1 offenbart ein Aufbewahrungssystem eines Fahrzeugs, mit einem Gehäuse, das einen ersten und einen zweiten Aufnahmeraum aufweist. Im ersten Aufnahmeraum ist ein Aufbewahrungsbehälter drehbar gelagert und über eine seitliche Öffnung im Gehäuse entlang der Rotationsachse des Aufbewahrungsbehälters dem Aufnahmeraum entnehmbar. Alternativ dazu ist der Aufbewahrungsbehälter orthogonal zur besagten Rotationsachse dem Aufnahmeraum entnehmbar. Das Aufbewahrungssystem kann eine erste Verriegelungseinrichtung aufweisen, die derart mit dem Aufbewahrungsbehälter in Verbindung steht, dass über die erste Verriegelungseinrichtung ein Verdrehen des Aufbewahrungsbehälters blockierbar ist. Darüber hinaus kann das Aufbewahrungssystem eine zweite Verriegelungseinrichtung aufweisen, über welche ein Entnehmen des Aufbewahrungsbehälters aus dem Aufnahmeraum blockierbar ist.

Aufgabe der Erfindung ist es, ein Halterungssystem eines Fahrzeugs, insbesondere Kraftfahrzeugs, zu schaffen, welches bei einfacher Handhabung und mit geringem Aufwand einen sicheren Halt eines in einer Vertiefung einer Innenverkleidung des Fahrzeugs lösbar zu halternden Gegenstandes gewährleistet. Ferner ist es Aufgabe der Erfindung, ein Fahrzeug mit einem derartigen Halterungssystem bereitzustellen.

Ausgehend von einem Halterungssystem eines Fahrzeugs, insbesondere eines Kraftfahrzeugs, mit einer Innenverkleidung des Fahrzeugs, und mit einem an der Innenverkleidung lösbar zu halternden Gegenstand, wobei die Innenverkleidung eine Vertiefung zur Aufnahme des Gegenstandes, mit einem Boden, mit Wandabschnitten und mit einer Beschicköffnung für besagten Gegenstand ausbildet sowie Haltemittel zur Fixierung des Gegenstandes aufweist, wobei der Gegenstand eine Länge "l", eine Breite "b" und eine Höhe "h" aufweist, wobei die Breite "b" größer der Höhe "h" gewählt ist und die Länge "l" und die Breite "b" eine Breitseite und die Länge "l" und die Höhe "h" eine Schmalseite des Gegenstandes definieren, und wobei zumindest zwei gegenüberliegend angeordnete, als erste Haltemittel fungierende und die Beschicköffnung verengende Vorsprünge vorgesehen und angeordnet sind, wird die gestellte Aufgabe dadurch gelöst, dass die Vorsprünge derart vorgesehen und angeordnet sind, dass während des Beschickens der Vertiefung mit dem zu halternden Gegenstand derselbe ausschließlich mit seiner Schmalseite voran zwischen den Vorsprüngen hindurch in die Vertiefung einführbar und infolge einer nachgeschalteten Drehbewegung um eine Längsachse desselben derart in der Vertiefung eingefasst oder einfassbar ist, dass eine Breitseite des besagten Gegenstandes hinter den die Beschicköffnung verengenden Vorsprüngen zum Liegen oder zur Anlage kommt.

Hierdurch ist ein besonders einfaches und kostengünstiges Halterungssystem geschaffen, um den Gegenstand in einer zu demselben korrespondierenden Vertiefung der besagten Innenverkleidung sicher zu halten, insbesondere in alle Richtungen sicher zu halten. Vorteilhaft sind separate anbringbare Sicherungsmittel entbehrlich. Der besagte Gegenstand kann allein durch eine Kombination aus einer linearen Bewegung und einer nachgeschalteten Drehbewegung um etwa 90° um besagte Längsachse des Gegenstandes in der Vertiefung fixiert werden und erlaubt demnach auch eine Einhandbetätigung.

Die Unteransprüche beschreiben bevorzugte Weiterbildungen oder Ausgestaltungen der Erfindung.

Danach weist der Gegenstand gemäß einer bevorzugten Ausführungsform der Erfindung eine quaderförmige Gestalt auf, welche beispielsweise durch den Gegenstand selbst vorgegeben ist. Demgegenüber kann der besagte, bevorzugt quaderförmige Gegenstand auch durch ein Gehäuse zur Aufnahme eines anderen Gegenstandes, wie eines zusammengefalteten Warndreiecks o.a., gebildet sein, welcher selbst keine quaderförmige Gestalt aufweisen muss.

Um den Gegenstand spielfrei oder nahezu spielfrei in der Vertiefung zu halten, weist diese eine als zweite Haltemittel fungierende Rippenstruktur mit einer Vielzahl Einzelrippen auf. Hierbei können die Einzelrippen der Rippenstruktur starr oder flexibel ausgebildet sein. Durch eine flexible, insbesondere federelastische Ausbildung der Einzelrippen ist überdies die Möglichkeit geschaffen, den Gegenstand mit einer bestimmten Vorspannung in der Vertiefung zu haltern. Wie die Erfindung weiter bevorzugt vorsieht, weist zumindest ein Teil der Einzelrippen der Rippenstruktur wenigstens bereichsweise einen die Bewegung des zu halternden Gegenstandes während des Beschickens der Vertiefung mit demselben unterstützenden Verlauf auf, indem sich die betreffenden Einzelrippen in Bewegungsrichtung des Gegenstandes erstrecken. Hierdurch ist vorteilhaft die Handhabe des Gegenstandes sowohl während des besagten Beschickvorganges als auch während der Entnahme des Gegenstandes aus der Vertiefung erleichtert. Hierzu weisen im Bereich des Bodens der Vertiefung vorgesehene Einzelrippen bevorzugt einen gleichgerichteten kurvenförmigen, konvexen Verlauf auf, welcher insbesondere die besagte Drehbewegung des Gegenstandes unterstützt respektive den Gegenstand auf einer vorgegebenen Kurvenbahn führt.

Um die Fixierung des Gegenstandes innerhalb der Vertiefung noch weiter zu verbessern oder eine Alternative zur Rippenstruktur mit den starr oder flexibel ausgeführten Einzelrippen zur Verfügung zu stellen, ist innerhalb der Vertiefung bevorzugt zumindest ein als drittes Haltemittel fungierendes federelastisch vorgespanntes Halteelement angeordnet, welches den in die Vertiefung eingesetzten Gegenstand federelastisch, d.h. mit Vorspannung, gegen die Innenkontur der Vertiefung presst. Das Halteelement kann beispielsweise durch ein federelastisches und/oder federbeaufschlagtes Druckelement, einen Elastomerkörper oder dgl. mehr gebildet sein. Um die manuelle Handhabe des zu halternden Gegenstandes noch weiter zu verbessern, weist zumindest ein Wandabschnitt der Vertiefung vorteilhaft eine Ausformung für einen Fingereingriff auf.

Die Erfindung betrifft auch ein Fahrzeug, insbesondere ein Kraftfahrzeug, mit einem Halterungssystem der vorstehend beschriebenen Art.

Nachstehend wird die Erfindung anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Es zeigen:
- Fig. 1: eine äußerst schematische Schnittdarstellung eines Fahrzeughecks (sogenannter Y0-Schnitt) mit einer Heckklappe im geschlossenen sowie im geöffneten Betriebszustand, welche Heckklappe eine Innenverkleidung mit einem erfindungsgemäßen Halterungssystem zur Halterung eines Gegenstandes aufweist,
- Fig. 2: die Einzelheit "Z" nach Fig. 1 mit einer äußerst schematischen Darstellung der Handhabung des Gegenstandes im geöffneten Betriebszustand der Heckklappe,
- Fig. 3: eine Aufsicht auf die Innenverkleidung der Heckklappe nach Fig. 1 mit einem gehalterten Gegenstand,
- Fig. 4: die Einzelheit "Y" nach Fig. 3, jedoch ohne besagten Gegenstand,
- Fig. 5: eine perspektivische Darstellung der Innenverkleidung samt eines zu halternden Gegenstandes in einer Beschickposition zu einem Zeitpunkt "t₀",
- Fig. 6a: die Einzelheit "X" nach Fig. 5 (A-Seite bzw. Vorderseite),
- Fig. 6b: die Einzelheit "X"' nach Fig. 5 (B-Seite bzw. Rückseite),
- Fig. 7a-c: äußerst schematisch drei Schnittansichten der Innenverkleidung samt des zu halternden Gegenstand zu einem fortgeschrittenen Zeitpunkt "t₁" des Beschickvorgangs (Schnitt "I-I", "II-II", "III-III" nach Fig. 3),
- Fig. 8a-c: äußerst schematisch drei Schnittansichten der Innenverkleidung samt des zu halternden Gegenstand zu einem weiter fortgeschrittenen Zeitpunkt "t₂" des Beschickvorgangs (Schnitt "I-I", "II-II", "III-III" nach Fig. 3),
- Fig. 9a-c: äußerst schematisch drei Schnittansichten der Innenverkleidung samt des zu halternden Gegenstand zu einem noch weiter fortgeschrittenen Zeitpunkt "t₃" des Beschickvorgangs, welcher einer Haltestellung des Gegenstands entspricht (Schnitt "I-I", "II-II", "III-III" nach Fig. 3), und
- Fig. 10: eine äußerst schematische Schnittdarstellung eines alternativen Halterungssystems zur Halterung eines Gegenstandes (Schnitt "I-I" nach Fig. 3)

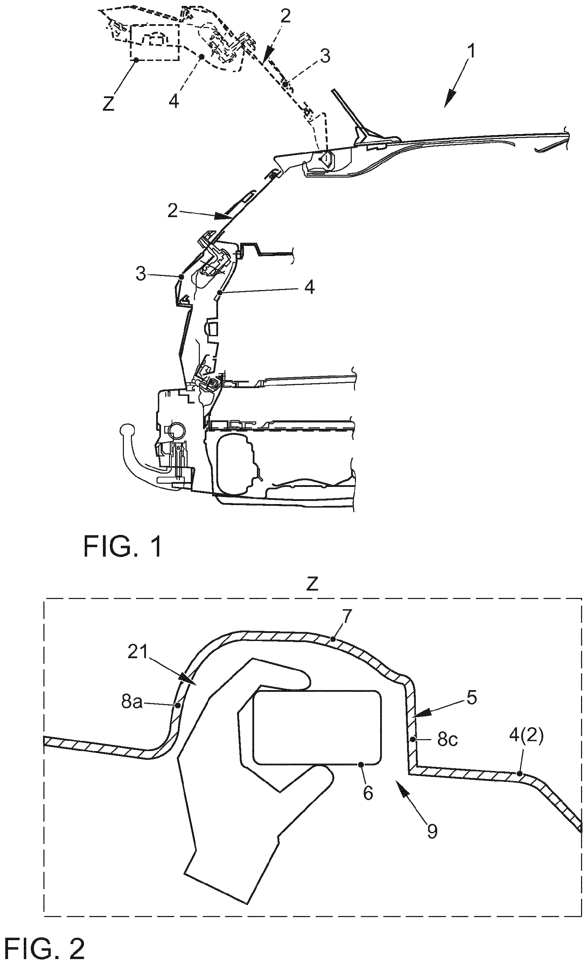

Fig. 1 zeigt zunächst den Heckbereich eines Fahrzeugs 1, vorliegend eines Personenkraftwagens mit Steilheck, welches eine Heckklappe 2 aufweist, die vorliegend sowohl in ihrem geschlossenen als auch in ihrem offenen Betriebszustand (gestrichelte Linienführung) dargestellt ist. Die Heckklappe 2 weist ein Außenblech 3 und eine Innenverkleidung 4 aus bevorzugt einem Kunststoff auf. Die Innenverkleidung 4 ist bevorzugt nach einem an sich bekannten Kunststoff-Spritzgießverfahren hergestellt.

Die Innenverkleidung 4 bildet eine Vertiefung 5 zur Aufnahme eines Gegenstandes 6, mit einem Boden 7, mit Wandabschnitten 8a-d und mit einer Beschicköffnung 9 für besagten Gegenstand 6 aus (vgl. Fig. 2-5). Im geöffneten Betriebszustand der Heckklappe 2 weist besagte Beschicköffnung 9 zumindest im Wesentlichen nach Fahrzeug-unten (vgl. Fig. 2) oder in alternativen Ausführungen nach Fahrzeug-hinten. Bevorzugt in dieser Position wird die Vertiefung 5 mit dem Gegenstand 6 beschickt bzw. wird der Gegenstand 6 der Vertiefung 5 entnommen.

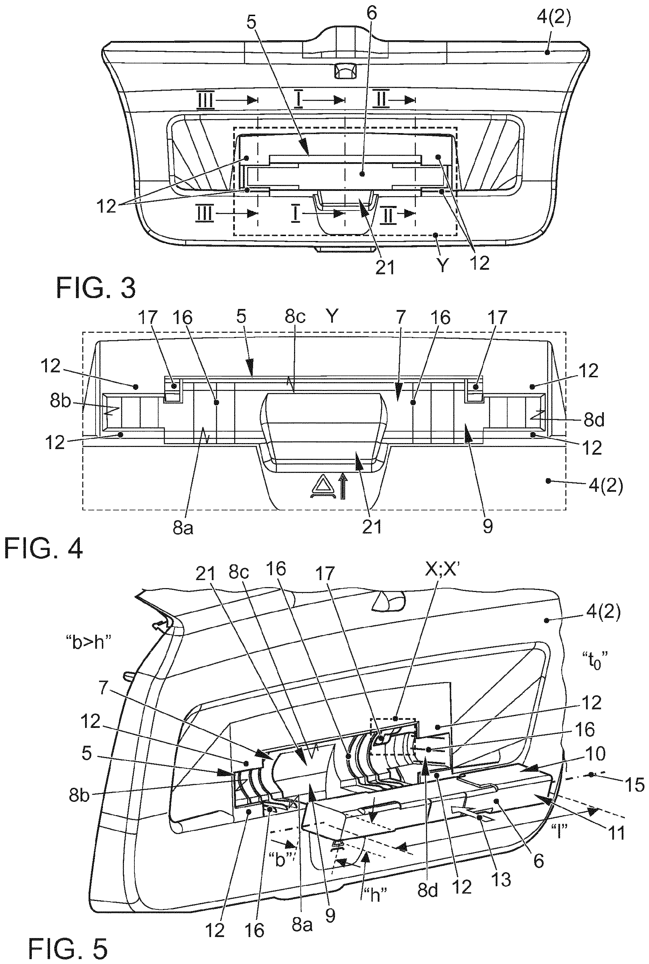

Gemäß einer bevorzugten Ausführungsform der Erfindung weist der Gegenstand 6 eine quaderförmige Gestalt auf und ist lediglich beispielgebend durch ein Aufnahmegehäuse für ein nicht zeichnerisch dargestelltes, zusammenklappbares Warndreieck gebildet. Im Allgemeinen ist ein Warndreieck ständig im Fahrzeug 1 mitzuführen. Die Erfindung beschränkt sich jedoch nicht auf diesen konkret benannten Gegenstand 6, sondern erfasst eine Vielzahl im Fahrzeug 1 zu verstauender Gegenstände 6, wie beispielsweise auch einen Verbandskasten. In jedem Fall ist jedoch Voraussetzung, dass der Gegenstand 6 eine Länge "l", eine Breite "b" und eine Höhe "h" aufweist, wobei die Breite "b" größer der Höhe "h" gewählt ist und die Länge "l" und die Breite "b" demnach eine Breitseite 10 des Gegenstandes 6 und die Länge "l" und die Höhe "h" eine Schmalseite 11 des Gegenstandes 6 definieren (vgl. insbes. Fig. 5).

Die Vertiefung 5 weist Abmessungen auf, die eine möglichst raumsparende Aufnahme sowie eine Handhabung des Gegenstandes 6 in derselben erlauben. Vorliegend weist die Vertiefung 5 - abgesehen von einer konvexen Ausbildung des Bodens 7 derselben - eine weitestgehend quaderförmige Gestalt auf. Beidenends der Beschicköffnung 9 der Vertiefung 5 sind je zwei gegenüberliegend angeordnete und die Beschicköffnung 9 verengende Vorsprünge 12 vorgesehen und angeordnet. Hierdurch ist eine Beschicköffnung 9 mit Abmessungen geschaffen, die es lediglich erlauben, den zu halternden Gegenstand 6 mit seiner Schmalseite 11 voran und zwischen den Vorsprüngen 12 hindurch in die Vertiefung 5 einzuführen. Hierneben fungieren die Vorsprünge 12 erfindungsgemäß auch als erste Haltemittel, worauf unten näher eingegangen wird.

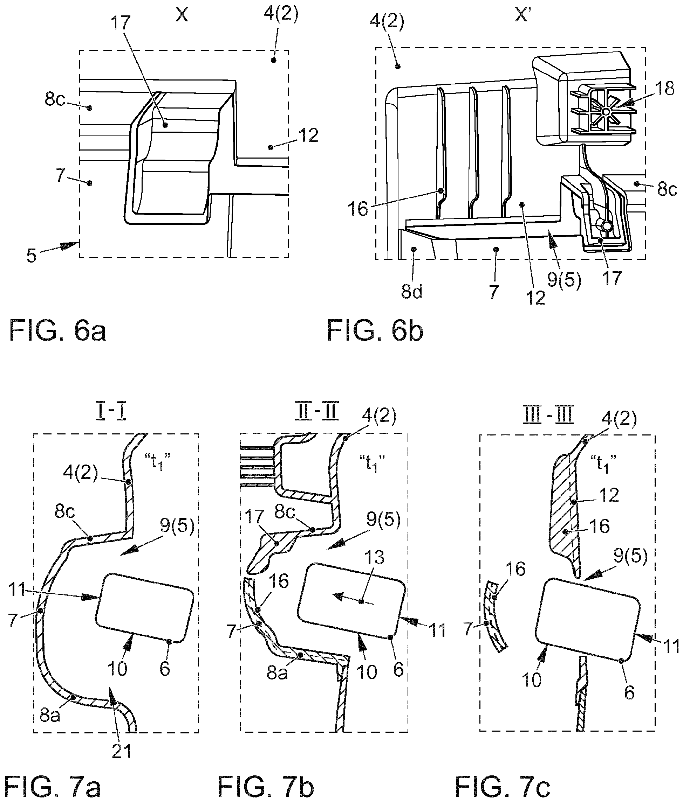

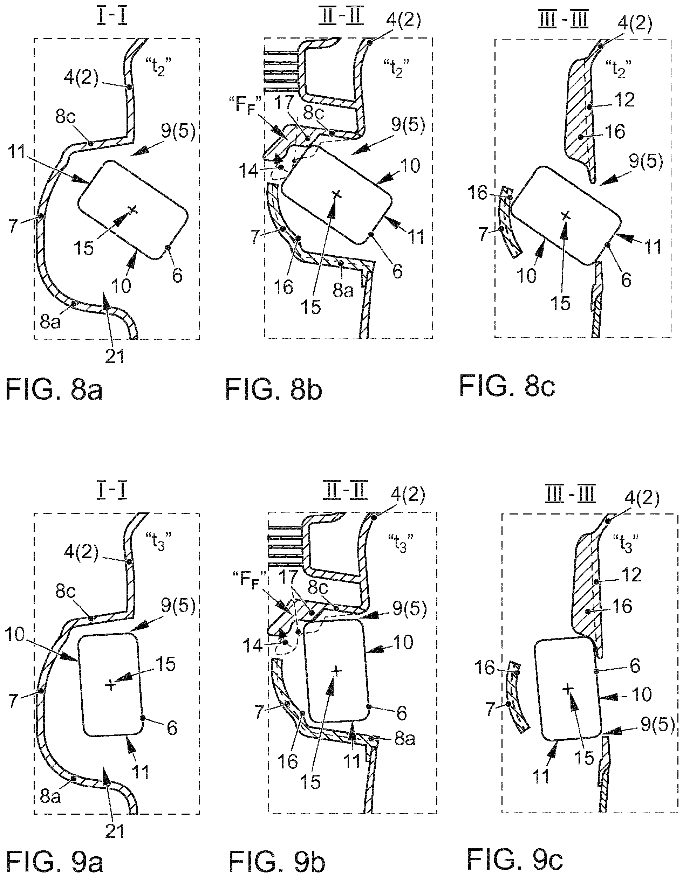

Nachstehend wird die Erfindung weiter in ihrer Funktion beschrieben. Wie bereits oben dargetan, wird während des manuellen Beschickens der Vertiefung 5 mit einem Gegenstand 6 der beschriebenen Art der Gegenstand 6 zunächst zu einem Zeitpunkt "t₀" vor der verengten Beschicköffnung 9 mit seiner Schmalseite 11 voran positioniert (vgl. Fig. 5). Im Anschluss daran wird der Gegenstand 6 zu einem Zeitpunkt "t₁" (Fig. 7a-c) entsprechend dem Richtungspfeil 13 in die Vertiefung 5 eingeführt. Hiernach, d.h. zu einem fortgeschrittenen Zeitpunkt "t₂" (Fig. 8a-c), wird der Gegenstand 6 entsprechend dem Richtungspfeil 14 um eine Längsachse 15 desselben, welche sich in Querrichtung, vorliegend in Y-Richtung der Innenverkleidung 4 erstreckt, gedreht, bis zu einem Zeitpunkt "t₃" eine Breitseite 10 hinter den die Beschicköffnung 9 verengenden Vorsprüngen 12 zum Liegen oder zur Anlage kommt (Fig. 9a-c). Der Drehwinkel beträgt etwa 90°. Diese Position des Gegenstandes 6 entspricht der Halterungsposition desselben innerhalb der Vertiefung 5. Der Gegenstand 6 ist somit allseitig eingefasst, nämlich zum einen durch den Boden 7 und die Wandabschnitte 8a-d und zum anderen durch die als Haltemittel fungierenden Vorsprünge 12, die somit einen unbeabsichtigten, selbständigen Durchtritt des Gegenstandes 6 durch die Beschicköffnung 9 hindurch nach außen verhindern. Die Entnahme des Gegenstandes 6 aus der Vertiefung 5 der Innenverkleidung erfolgt in umgekehrter Reihenfolge.

Um den Gegenstand 6 spielfrei oder nahezu spielfrei in der Vertiefung 5 zu halten, weist die Vertiefung 5 im Bereich des Bodens 7, der Wandabschnitte 8a-d und der Vorsprünge 12 eine als zweite Haltemittel fungierende Rippenstruktur mit einer Vielzahl in die Vertiefung 5 hinein gerichteter Einzelrippen 16 auf (vgl. insbes. Fig. 4, 5 und 6b). Die Einzelrippen 16 der Rippenstruktur sind bevorzugt starr oder weitestgehend starr sowie einstückig mit der Innenverkleidung 4 ausgebildet. Alternativ können die Einzelrippen 16 auch flexibel, insbesondere federelastisch ausgebildet sein, wodurch die Möglichkeit geschaffen ist, den Gegenstand 6 mit einer bestimmten Vorspannung in der Vertiefung 5 zu haltern. Eine Innenverkleidung 4 mit einer derartigen Rippenstruktur lässt sich beispielsweise nach einem Zwei- oder Mehr-Komponenten-Spritzgießverfahren herstellen. Darüber hinaus bewirkt die vorbeschriebene Rippenstruktur vorteilhaft eine Versteifung des die Vertiefung 5 bildendenden Bereiches der Innenverkleidung 4.

Wie den Fig. 4, 5 und 6b weiter zu entnehmen ist, sind die Einzelrippen 16 derart angeordnet und ausgebildet, dass diese die Bewegung des zu halternden Gegenstandes 6 während des Beschickens der Vertiefung 5 mit demselben unterstützen. Es ist ersichtlich, dass sich die Einzelrippen 16 in Bewegungsrichtung des Gegenstandes 6 während des besagten Beschickvorganges erstrecken. Hierdurch ist vorteilhaft die Handhabe des Gegenstandes 6 sowohl während des Beschickvorganges als auch während der Entnahme des Gegenstandes 6 aus der Vertiefung 5 erleichtert.

Im Detail ist ersichtlich, dass die Einzelrippen 16 der Wandabschnitte 8a-d gleichgerichtet, d.h. im Abstand parallel zueinander, der anfänglichen linearen Einführbewegung folgen, wogegen die Einzelrippen 16 des Bodens 7 in Anlehnung an die konvexe Ausbildung des Bodens 7 im Abstand parallel zueinander einen gleichgerichteten kurvenförmigen, konvexen Verlauf aufweisen und so der der linearen Einführbewegung nachgeschalteten Drehbewegung des Gegenstandes 6 folgen (Fig. 4 und 5). Auch die Einzelrippen 16 der Vorsprünge 12 sind beabstandet und parallel zueinander angeordnet, wogegen ein kurvenförmiger, konvexer Verlauf entbehrlich ist, da dieselben im Wesentlichen der Abstützung des in seiner End- bzw. Halterungsposition befindlichen Gegenstandes 6 dienen.

Um die Fixierung des Gegenstandes 6 innerhalb der Vertiefung 5 noch weiter zu verbessern, ist gemäß diesem Ausführungsbeispiel beidenends der Vertiefung 5 je ein als drittes Haltemittel fungierendes, federelastisch vorgespanntes Halteelement 17 angeordnet. Die Halteelemente 17 erlauben zum einen während des Beschickvorganges ein federelastisches Ausweichen derselben (vgl. Fig. 8b, 9b) und pressen zum anderen den in die Vertiefung 5 eingesetzten und in seiner End- bzw. Halterungsposition befindlichen Gegenstand 6 mit einer bestimmten Federkraft "F_{F}", d.h. mit Vorspannung gegen die Innenkontur der Vertiefung 5.

Vorliegend sind die Halteelemente 17 lediglich beispielgebend durch einstückig mit dem Innenverkleidungsteil 4 ausgebildete, federelastische und/oder federbeaufschlagte, sozusagen auskragende Druckelemente gebildet. Im Hinblick auf letztere Variante zeigt Fig. 6b eine Rückansicht des betreffenden Bereiches der Innenverkleidung, mit einem federelastisch an der Innenverkleidung 4 abgestützten Halteelement 17 samt einer steif ausgebildeten Federaufnahme 18 der Innenverkleidung 4, an welcher Federaufnahme 18 eine nicht zeichnerisch dargestellte Blattfeder anschraubbar ist, die sich dann einenends an der Innenverkleidung 4 und anderenends am freien Ende des Halteelements 17 abstützt.

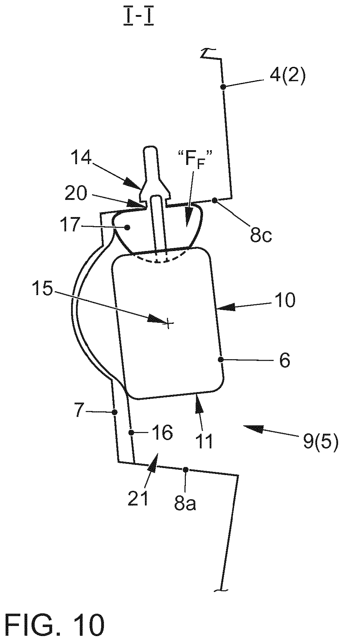

Die Erfindung beschränkt sich jedoch nicht auf die vorstehend beschriebenen bevorzugten Halteelemente 17, sondern erfasst z. B. auch ein, zwei oder mehr Halteelemente 17, die beispielsweise durch einen Elastomerkörper, wie zum Beispiel durch einen Schaumkörper aus elastischem Kunststoffschaum, gebildet und als Anbauteile an der Innenverkleidung 4 angebracht sind/werden. Fig. 10 zeigt insoweit äußerst schematisch eine Anordnung eines solchen Halteelements 17, welches durch Verrastung eines mit dem Halteelement 17 verbundenen Rastelements 19 in einer Bohrung 20 des Wandabschnitts 8c der Vertiefung 5 an demselben angebracht ist.

Um die manuelle Handhabe des zu halternden Gegenstandes 6 komfortabel zu gestalten bzw. ausreichend Freiraum zur Handhabung zur Verfügung zu stellen, weist der Wandabschnitt 8a der Vertiefung 5 eine Ausformung 21 für einen Fingereingriff auf (vgl. insbes. Fig. 2-4, 7a, 8a, 9a, 10). Vorliegend ist der Handhabungsbereich ein mittlerer Bereich des Wandabschnitts 8a.

Die vorstehend beschriebenen Ausführungsbeispiele stellen auf eine den Gegenstand 6 aufnehmende Vertiefung 5 ab, welche in einer Innenverkleidung 4 einer Heckklappe 2 eines Kraftfahrzeugs angeordnet ist. Die Erfindung beschränkt sich jedoch nicht auf dieses konkret beschriebene Innenverkleidungsteil, sondern erfasst auch jedwedes andere Innenverkleidungsteil eines Fahrzeugs 1. So kann besagte Innenverkleidung 4 auch durch eine Türinnenverkleidung, eine Dachinnenverkleidung oder dgl. mehr gebildet sein.

### Bezugszeichenliste

- 1: Fahrzeug
- 2: Heckklappe
- 3: Außenblech
- 4: Innenverkleidung
- 5: Vertiefung
- 6: Gegenstand
- 7: Boden
- 8a-d: Wandabschnitte
- 9: Beschicköffnung
- 10: Breitseite
- 11: Schmalseite
- 12: Vorsprung
- 13: Richtungspfeil
- 14: Richtungspfeil
- 15: Längsachse
- 16: Einzelrippen
- 17: Halteelement
- 18: Federaufnahme
- 19: Rastelement
- 20: Bohrung
- 21: Ausformung
- "l": Länge (Gegenstand 6)
- "b": Breite (Gegenstand 6)
- "h": Höhe (Gegenstand 6)

## Patentansprüche

1. Halterungssystem eines Fahrzeugs (1), insbesondere Kraftfahrzeugs, mit einer Innenverkleidung (4) des Fahrzeugs (1), und mit einem an der Innenverkleidung (4) lösbar zu halternden Gegenstand (6), wobei die Innenverkleidung (4) eine Vertiefung (5) zur Aufnahme des Gegenstandes (6), mit einem Boden (7), mit Wandabschnitten (8a, 8b, 8c, 8d) und mit einer Beschicköffnung (9) für besagten Gegenstand (6) ausbildet sowie Haltemittel zur Fixierung des Gegenstandes (6) in der Vertiefung (5) aufweist, wobei der Gegenstand (6) eine Länge "l", eine Breite "b" und eine Höhe "h" aufweist, wobei die Breite "b" größer der Höhe "h" gewählt ist und die Länge "l" und die Breite "b" eine Breitseite (10) und die Länge "l" und die Höhe "h" eine Schmalseite (11) des Gegenstandes (6) definieren, und wobei zumindest zwei gegenüberliegend angeordnete, als erste Haltemittel fungierende und die Beschicköffnung (9) verengende Vorsprünge (12) vorgesehen und angeordnet sind, **dadurch gekennzeichnet, dass** die Vorsprünge (12) derart vorgesehen und angeordnet sind, dass während des Beschickens der Vertiefung (5) mit dem zu halternden Gegenstand (6) derselbe ausschließlich mit seiner Schmalseite (11) voran zwischen den Vorsprüngen (12) hindurch in die Vertiefung (5) einführbar und infolge einer nachgeschalteten Drehbewegung um eine Längsachse (15) desselben derart in der Vertiefung (5) eingefasst oder einfassbar ist, dass eine Breitseite (10) des besagten Gegenstandes (6) hinter den die Beschicköffnung (9) verengenden Vorsprüngen (12) zum Liegen oder zur Anlage kommt.

2. Halterungssystem nach dem vorhergehenden Anspruch, **dadurch gekennzeichnet, dass** der Gegenstand (6) eine quaderförmige Gestalt aufweist.

3. Halterungssystem nacheinem der vorhergehenden Ansprüche, **dadurch gekennzeichnet, dass** die Vertiefung (5) eine als zweite Haltemittel fungierende Rippenstruktur mit einer Vielzahl Einzelrippen (16) aufweist.

4. Halterungssystem nach Anspruch 3, **dadurch gekennzeichnet, dass** die Einzelrippen (16) der Rippenstruktur starr oder flexibel ausgebildet sind.

5. Halterungssystem nach Anspruch 3 oder 4, **dadurch gekennzeichnet, dass** zumindest ein Teil der Einzelrippen (16) der Rippenstruktur wenigstens bereichsweise einen die Bewegung des zu halternden Gegenstandes (6) während des Beschickens der Vertiefung (5) mit demselben unterstützenden Verlauf aufweisen, indem sich die betreffenden Einzelrippen (16) in Bewegungsrichtung des Gegenstandes (6) erstrecken.

6. Halterungssystem nach Anspruch 5, **dadurch gekennzeichnet, dass** im Bereich des Bodens (7) der Vertiefung (5) vorgesehene Einzelrippen (16) einen gleichgerichteten kurvenförmigen, konvexen Verlauf aufweisen.

7. Halterungssystem nach einem der vorhergehenden Ansprüche, **dadurch gekennzeichnet, dass** innerhalb der Vertiefung (5) zumindest ein als drittes Haltemittel fungierendes federelastisch vorgespanntes Halteelement (17) angeordnet ist, welches den in die Vertiefung (5) eingesetzten Gegenstand (6) federelastisch gegen eine Innenkontur der Vertiefung (5) presst.

8. Halterungssystem nach Anspruch 7, **dadurch gekennzeichnet, dass** das Halteelement (17) durch ein federelastisches und/oder federbeaufschlagtes Druckelement, einen Elastomerkörper oder dergleichen gebildet ist.

9. Halterungssystem nach einem der vorhergehenden Ansprüche, **dadurch gekennzeichnet, dass** zumindest ein Wandabschnitt (8a) der Vertiefung (5) eine Ausformung (21) für einen Fingereingriff zur manuellen Handhabe des Gegenstandes (6) aufweist.

10. Fahrzeug (1), insbesondere Kraftfahrzeug, mit einem Halterungssystem nach einem der vorhergehenden Ansprüche.

## Claims

1. Mounting system of a vehicle (1), in particular of a motor vehicle, having an interior trim panelling (4) of the vehicle (1), and having an object (6) which is to be releasably mounted on the interior trim panelling (4), wherein the interior trim panelling (4) configures a depression (5) which for receiving the object (6) has a base (7), wall portions (8a, 8b, 8c, 8d), and an insertion opening (9) for said object (6), and has holding means for fixing the object (6) in the depression (5), wherein the object (6) has a length "1", a width "b", and a height "h", wherein the width "b" is chosen so as to be larger than the height "h", and the length "1" and the width "b" define a broad side (10), and the length "1" and the height "h" define a narrow side (11) of the object (6), and wherein at least two protrusions (12) are provided and disposed, which protrusions (12) are disposed opposite one another, function as first holding means, and constrict the insertion opening (9), **characterized in that** the protrusions (12) are provided and disposed in such a manner that while the object (6) to be mounted is being inserted into the depression (5) said object (6) between the protrusions (12) is introducible into the depression (5) exclusively by way of the narrow side (11) of said object (6) leading through said protrusions (12) and, as a result of a subsequent rotating movement about a longitudinal axis (15) of said object (6), is encased or able to be encased in the depression (5) in such a manner that a broad side (10) of said object (6) comes to lie or bear behind the protrusions (12) that constrict the insertion opening (9).

2. Mounting system according to the preceding claim, **characterized in that** the object (6) has a cuboid shape.

3. Mounting system according to one of the preceding claims, **characterized in that** the depression (5) has a ribbed structure which functions as second holding means and has a multiplicity of individual ribs (16) .

4. Mounting system according to Claim 3, **characterized in that** the individual ribs (16) of the ribbed structure are configured so as to be rigid or flexible.

5. Mounting system according to Claim 3 or 4, **characterized in that** at least part of the individual ribs (16) of the ribbed structure at least in regions have a profile that facilitates the movement of the object (6) to be mounted while inserting the latter into the depression (5) **in that** the respective individual ribs (16) extend in the direction of movement of the object (6).

6. Mounting system according to Claim 5, **characterized in that** individual ribs (16) that are provided in the region of the base (7) of the depression (5) have an identically oriented, curved, convex profile.

7. Mounting system according to one of the preceding claims, **characterized in that** at least one spring-elastically pre-tensioned holding element (17) which functions as a third holding means is disposed within the depression (5), said holding element (17) in a spring-elastic manner pressing the object (6) placed in the depression (5) against an internal contour of the depression (5).

8. Mounting system according to Claim 7, **characterized in that** the holding element (17) is formed by a spring-elastic and/or spring-impinged compression element, an elastomeric member, or the like.

9. Mounting system according to one of the preceding claims, **characterized in that** at least one wall portion (8a) of the depression (5) has a moulding (21) for fingers to engage so as to manually handle the object (6).

10. Vehicle (1), in particular a motor vehicle, having a mounting system according to one of the preceding claims.

## Revendications

1. Système de retenue pour un véhicule (1), en particulier un véhicule automobile, doté d'un habillage intérieur (4) du véhicule (1) et d'un objet (6) devant être retenu de manière amovible sur l'habillage intérieur (4), l'habillage intérieur (4) présentant un renfoncement (5) pour recevoir l'objet (6), réalisé avec un fond (7), des portions de parois (8a, 8b, 8c, 8d) et une ouverture de chargement (9) pour ledit objet (6), et présentant des moyens de retenue pour la fixation de l'objet (6) dans le renfoncement (5), l'objet (6) présentant une longueur "l", une largeur "b" et une hauteur "h", la largeur "b" étant supérieure à la hauteur "h" et la longueur "l" et la largeur "b" définissant un côté large (10) et la longueur "l" et la hauteur "h" définissant un côté étroit (11) de l'objet (6), et au moins deux saillies (12) disposées de manière opposée, servant de premiers moyens de retenue et rétrécissant l'ouverture de chargement (9) étant prévues et disposées, **caractérisé en ce que** les saillies (12) sont prévues et disposées de telle sorte que pendant le chargement de l'objet à retenir (6) dans le renfoncement (5), celui-ci puisse être introduit dans le renfoncement (5) exclusivement avec son côté étroit (11) en avant entre les saillies (12) et, après un mouvement de rotation subséquent autour d'un axe longitudinal (15) de celui-ci, puisse être ou soit enchâssé dans le renfoncement (5) de telle sorte qu'un côté large (10) dudit objet (6) vienne se placer ou s'appuyer derrière les saillies (12) rétrécissant l'ouverture de chargement (9).

2. Système de retenue selon la revendication précédente, **caractérisé en ce que** l'objet (6) présente une forme parallélépipédique.

3. Système de retenue selon l'une quelconque des revendications précédentes, **caractérisé en ce que** le renfoncement (5) présente une structure nervurée servant de deuxièmes moyens de retenue avec une pluralité de nervures individuelles (16).

4. Système de retenue selon la revendication 3,
**caractérisé en ce que** les nervures individuelles (16) de la structure nervurée sont réalisées sous forme rigide ou flexible.

5. Système de retenue selon la revendication 3 ou 4,
**caractérisé en ce qu'**au moins une partie des nervures individuelles (16) de la structure nervurée présentent, au moins en partie, une allure favorisant le mouvement de l'objet à retenir (6) pendant son chargement dans le renfoncement (5), par le fait que les nervures individuelles concernées (16) s'étendent dans la direction de déplacement de l'objet (6).

6. Système de retenue selon la revendication 5,
**caractérisé en ce que** des nervures individuelles (16) prévues dans la région du fond (7) du renfoncement (5) présentent une allure convexe de forme courbe orientée dans le même sens.

7. Système de retenue selon l'une quelconque des revendications précédentes, **caractérisé en ce qu'**à l'intérieur du renfoncement (5) est disposé au moins un élément de retenue (17) précontraint de manière élastique à ressort, servant de troisième moyen de retenue, lequel presse l'objet (6) inséré dans le renfoncement (5) de manière élastique à ressort contre un contour intérieur du renfoncement (5).

8. Système de retenue selon la revendication 7,
**caractérisé en ce que** l'élément de retenue (17) est formé par un élément de pression élastique à ressort et/ou sollicité par ressort, un corps élastomère ou similaire.

9. Système de retenue selon l'une quelconque des revendications précédentes, **caractérisé en ce qu'**au moins une portion de paroi (8a) du renfoncement (5) présente une formation (21) pour l'engagement des doigts pour une manipulation manuelle de l'objet (6).

10. Véhicule (1), en particulier véhicule automobile, comprenant un système de retenue selon l'une quelconque des revendications précédentes.
